# EUROPEAN PATENT APPLICATION

(11) **EP 2 966 892 A1**
(43) Date of publication of application: **13.01.2016**
(21) Application number: 15158605.4
(22) Date of filing: 11.03.2015
(51) Int. Cl.: H04W 16/14, H04W 84/12

(54) **CHANNEL SELECTION FOR WIRELESS COMMUNICATION DEVICE AND WIRELESS COMMUNICATION METHOD**

(30) Priority: 09.07.2014 JP 2014141708
(71) Applicant: Kabushiki Kaisha Toshiba, Tokyo 105-8001 (JP)
(72) Inventor: Horisaki, Koji, Tokyo, 105-8001 (JP); Namekata, Minoru, Tokyo, 105-8001 (JP); Sekiya, Masahiro, Tokyo, 105-8001 (JP)
(74) Representative: Hoffmann Eitle

(57) **Abstract**

The wireless communication device includes a first wireless unit and a control unit. A channel belonging to a used band of the first wireless communication system is set for the first wireless unit. The control unit operates the wireless communication device as the access point if the first wireless unit receives a standard signal in compliance with a standard of the first wireless communication system.

## Description

### FIELD

Embodiments described herein relate generally to a wireless communication device and a wireless communication method.

### BACKGROUND

Frequency bands usable for wireless LANs include frequency bands used by wireless communication systems other than wireless LANs. For example, the 5 GHz band is also used for radar communications.

In the wireless communications through wireless LANs, it is mandatory to avoid interference with radars. Thus, a wireless LAN communication device has a function called dynamic frequency selection (DFS). DFS is a function for dynamically changing a channel used for a wireless LAN so as to prevent the influence of the wireless communications through the wireless LAN on radar.

In DFS, before the beginning of use of a channel belonging to a used radar band, a radar wave for the channel is monitored at least for 60 seconds.

However, such monitoring of a radar wave delays the start of wireless communications through a wireless LAN.

Thus, wireless communications need to be quickly started in a wireless communication device.

### BRIEF DESCRIPTION OF THE DRAWINGS

FIG. 1 is a block diagram showing an example of the configuration of a wireless communication device 10 according to a first embodiment;
FIG. 2 is a schematic diagram illustrating the used band of the wireless LAN;
FIG. 3 is a flowchart showing the operation example of the wireless communication device 10 according to the first embodiment;
FIG. 4 is a flowchart showing the operation example of the wireless communication device 10 according to the second embodiment; and
FIG. 5 is a flowchart showing the operation example of the wireless communication device 10 according to the third embodiment.

### DETAILED DESCRIPTION

A wireless communication device according to an embodiment includes a first wireless unit and a control unit. A channel belonging to a used band of the first wireless communication system is set for the first wireless unit. The control unit operates the wireless communication device as the access point if the first wireless unit receives a standard signal in compliance with a standard of the first wireless communication system. If at least one reception channel for the standard signal belongs to a first band outside a used band of a second wireless communication system in the used band of the first wireless communication system, the control unit sets a channel other than the at least one reception channel belonging to the first band for the first wireless unit. In this way, the control unit allows the wireless communication device to operate as the access point for use of the channel other than the at least one reception channel belonging to the first band. If the at least one reception channel belongs to a second band in the used band of the second wireless communication system in the used band of the first wireless communication system, the control unit allows the wireless communication device to operate as the access point for use of the at least one reception channel belonging to the second band.

Embodiments will be described below with reference to the accompanying drawings. The embodiments below are merely exemplary and thus do not limit the present invention.

### (First Embodiment)

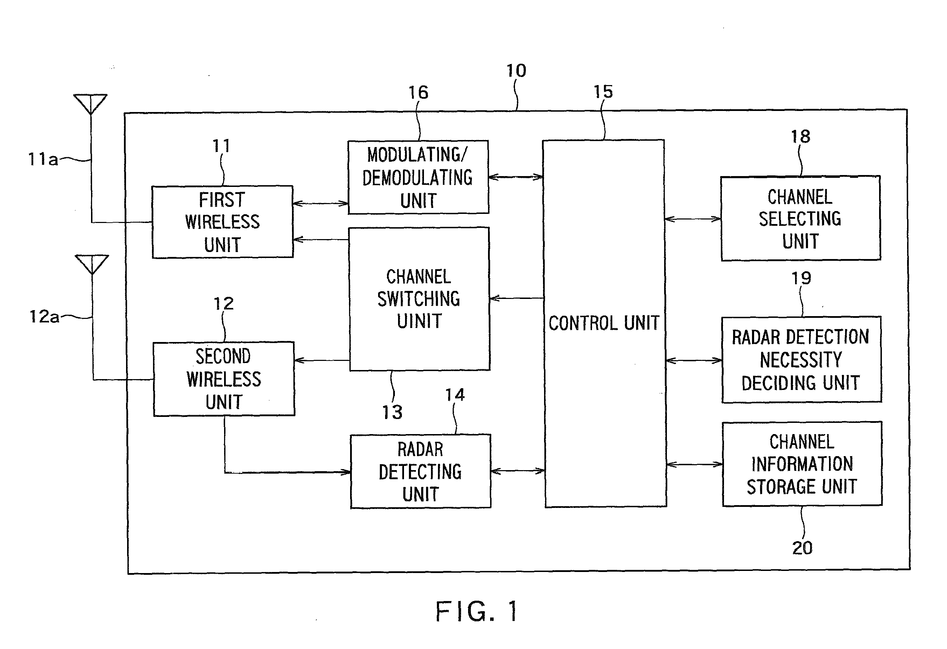

FIG. 1 is a block diagram showing an example of the configuration of a wireless communication device 10 according to a first embodiment.

As shown in FIG. 1, the wireless communication device 10 includes a first wireless unit 11, a second wireless unit 12, a channel switching unit 13, a radar detecting unit 14, and a control unit 15. The radar detecting unit 14 is an example of a detecting unit.

As shown in FIG. 1, the wireless communication device 10 further includes modulating/demodulating unit 16, a channel selecting unit 18, a radar detection necessity deciding unit 19, and a channel information storage unit 20.

The wireless communication device 10 according to the present embodiment provided with the aforementioned components can perform wireless communications through a wireless LAN, an example of a first wireless communication system.

The first wireless unit 11 will be specifically described below.

As shown in FIG. 1, a first antenna 11a is connected to the first wireless unit 11.

For the first wireless unit 11, a channel belonging to the used band of the wireless LAN is set.

The used band of the wireless LAN will be described below.

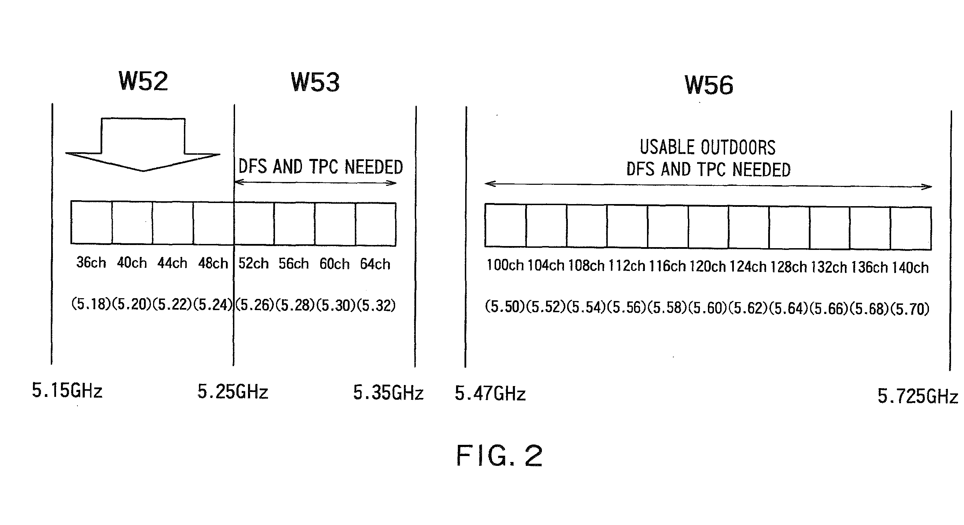

FIG. 2 is a schematic diagram illustrating the used band of the wireless LAN. FIG. 2 shows the 5 GHz band as the used band of the wireless LAN.

The 5 GHz band shown in FIG. 2 has a larger number of channels than in the 2.4 GHz band, which is not shown, and hardly causes radio wave interference between wireless LANs. As will be described later, the 5 GHz band contains the used band of a radar system that is an example of a second wireless communication system.

As shown in FIG. 2, the 5 GHz band is divided into three bands W52, W53, and W56.

The band W52 ranges from 5.15 GHz to 5.25 GHz. As shown in FIG. 2, the band W52 has four channels 36ch, 40ch, 44ch, and 48ch.

The band W53 ranges from 5.25 GHz to 5.35 GHz. As shown in FIG. 2, the band W53 has channels 52ch, 56ch, 60ch, and 64ch.

The band W56 ranges from 5.47 GHz to 5.725 GHz. As shown in FIG. 2, the band W56 has channels 100ch, 104ch, 108ch, 112ch, 116ch, 120ch, 124ch, 128ch, 132ch, 136ch, and 140ch.

Of the three bands W52, W53, and W56 above, the band W52 lies outside the used band of the radar system.

Specifically, the band W52 is an example of a first band outside the used band of the second wireless communication system in the used band of the first wireless communication system. The band W52 only allows indoor use of a wireless LAN.

If the wireless LAN is used on the channel belonging to the band W52, the wireless communication device 10 does not need to operate DFS or TPC (Transmit Power Control).

On the other hand, the bands W53 and W56 are contained in the used band of the radar system. Specifically, the bands W53 and W56 are examples of a second band contained in the used band of the second wireless communication system in the used band of the first wireless communication system.

The band W53 only allows indoor use of the wireless LAN. The band W56 further allows outdoor use of the wireless LAN.

If the wireless LAN is used on the channel belonging to the band W53 or W56, the wireless communication device 10 needs to operate DFS or TPC.

The first wireless unit 11 shown in FIG. 1 transmits and receives a communication signal on a set channel from the wireless LAN through the first antenna 11a.

The first wireless unit 11 may be configured for multi-carrier wireless transmission. The multi-carrier wireless transmission may be transmission of orthogonal frequency division multiplexing (OFDM) and so on.

In the case of multi-carrier wireless transmission performed by the first wireless unit 11 according to OFDM, signals transmitted and received in the first wireless unit 11 may have formats including preambles, guard intervals, and data symbols.

In this case, the preamble is a signal for detection and synchronization of the leading edge position of a signal. The data symbol is a signal containing information to be transmitted. The guard interval is a signal for suppressing interference that is likely to occur between adjacent symbols.

Moreover, the channel for the first wireless unit 11 may be set by receiving an oscillation signal corresponding to the set channel in the first wireless unit 11 from the channel switching unit 13 and so on.

The specific structure of the first wireless unit 11 having this function is not limited. For example, the first wireless unit 11 may include the electronic components of a transmission system and a reception system.

If the first wireless unit 11 includes the electronic components of a transmission system and a reception system, the electronic components of the transmission system may include a digital-to-analog converter, a filter, a mixer, a power amplifier, and a transmission/reception changeover switch, which are not shown.

In this case, the digital-to-analog converter converts a digital transmission signal, which is outputted from the modulating/demodulating unit 16, to an analog signal, and then outputs the converted transmission signal to the filter.

The filter removes the unnecessary frequency components of the transmission signal outputted from the digital-to-analog converter, and then outputs the transmission signal free of unnecessary frequency components to the mixer.

The mixer receives the oscillation signal at a frequency corresponding to the set channel and the transmission signal outputted from the filter. Subsequently, the mixer mixes the inputted oscillation signal and transmission signal so as to perform up-conversion on the transmission signal, and then outputs the up-converted transmission signal to the power amplifier.

The power amplifier amplifies the transmission signal up-converted by the mixer, and then the amplified transmission signal is transmitted from the first antenna 11a through the transmission/reception changeover switch.

On the other hand, the electronic components of the reception system may include a transmission/reception changeover switch, a low noise amplifier, a mixer, a filter, and an analog-to-digital converter, which are not shown.

In this case, the low-noise amplifier receives a receiving signal from the first antenna 11a through the transmission/reception changeover switch. The low-noise amplifier amplifies the received signal and outputs the amplified signal to the mixer.

The mixer receives the receiving signal outputted from the low noise amplifier and the oscillation signal at the frequency corresponding to the set channel. Subsequently, the mixer mixes the inputted receiving signal and oscillation signal so as to perform down conversion on the receiving signal, and then outputs the down-converted receiving signal to the filter.

The filter removes the unnecessary frequency components of the receiving signal outputted from the mixer and then outputs the receiving signal free of unnecessary frequency components to the modulating/demodulating unit 16.

The second wireless unit 12 shown in FIG. 1 will be specifically described below.

As shown in FIG. 1, a second antenna 12a is connected to the second wireless unit 12.

A channel belonging to the second band is set for the second wireless unit 12.

The second wireless unit 12 receives the communication signal of the radar system through the second antenna 12a on the channel belonging to the second band set for the second wireless unit 12.

The setting of the channel for the second wireless unit 12 and the specific structure of the second wireless unit 12 are identical to those of the first wireless unit 11.

The channel switching unit 13 in FIG. 1 will be specifically described below.

The channel switching unit 13 switches the channel set for the first wireless unit 11. The channel switching unit 13 may switch, in the second band, the channel set for the second wireless unit 12.

The specific structure of the channel switching unit 13 having this function is not limited. For example, the channel switching unit 13 may include an oscillation circuit that outputs, to the first wireless unit 11, an oscillation signal corresponding to the channel to be set for the first wireless unit 11 and outputs, to the second wireless unit 12, an oscillation signal corresponding to the channel to be set for the second wireless unit 12.

The oscillation circuit may output an oscillation signal according to a control signal from the control unit 15. Specifically, the oscillation circuit may generate a reference oscillation signal, multiply the generated reference oscillation signal by a multiplier according to the control signal from the control unit 15, and then output the signal to the wireless units 11 and 12.

Furthermore, the oscillation circuit may include a phase locked loop (PLL).

The radar detecting unit 14 shown in FIG. 1 will be specifically described below.

The radar detecting unit 14 receives a reception result on the channel belonging to the second band set through the second wireless unit 12. The radar detecting unit 14 detects the communication signal through the radar system based on the inputted reception result.

A signal to be detected by the radar detecting unit 14 may have signal strength not lower than a threshold value, out of the communication signals through the radar system. Thus, if the threshold value of signal strength is provided for the signal to be detected, a detection result by the radar detecting unit 14 is undetected even when a communication signal lower than the threshold value is received by the second wireless unit 12.

The specific structure of the radar detecting unit 14 having this function is not limited. For example, the radar detecting unit 14 may be a semiconductor integrated circuit.

The semiconductor integrated circuit may be embodied by a signal processing circuit including a media access control (MAC) unit and a baseband processor (Baseband Processor) unit.

The signal processing circuit may have the function of transmitting and receiving the communication signal. Specifically, the signal processing circuit may transmit and receive the communication signal to and from the wireless unit 11 or detect the error of the communication signal.

The control unit 15 shown in FIG. 1 will be specifically described below.

The control unit 15 detects that the first wireless unit 11 has received a signal in compliance with a wireless LAN standard, that is, IEEE802.11 (hereinafter, will be called a standard signal).

The standard signal may be a beacon that is transmitted from the base station of the wireless LAN, that is, another access point. The beacon may include various parameters such as a service set ID (SSID), a transmission speed, a security system, quality of service (QoS), and capability information.

The control unit 15 may detect the reception of the standard signal by analyzing the frame format of the receiving signal of the first wireless unit 11 and detecting a frame conforming to IEEE802.11.

If the reception of the standard signal is detected, the control unit 15 controls the channel switching unit 13 to operate the wireless communication device 10 as an access point of the wireless LAN. That is, the control unit 15 operates the wireless communication device 10 as an access point of the wireless LAN when the reception of the standard signal is detected.

In this case, a channel belonging to the first band may be the reception channel of the standard signal (hereinafter, may be simply referred to as a reception channel), that is, the channel set for the first wireless unit 11 upon receipt of the standard signal.

In this way, if the reception channel belongs to the first band, the control unit 15 causes the channel switching unit 13 to switch the channel set for the first wireless unit 11 from the reception channel to a channel belonging to the first band other than the reception channel. That is, the control unit 15 sets the channel belonging to the first band other than the reception channel for the first wireless unit 11.

In response to the switching to the channel other than the reception channel, the control unit 15 operates the wireless communication device 10 as an access point for the use of the switched channel.

On the other hand, the reception channel may belong to the second band. If the reception channel belongs to the second band, in this way, the control unit 15 keeps, at the reception channel, the channel set for the first wireless unit 11.

The keeping of the reception channel causes the control unit 15 to operate the wireless communication device 10 as an access point for the use of the reception channel.

Furthermore, if the control unit 15 operates the wireless communication device 10 as an access point for the use of the reception channel, the control unit 15 causes the radar detecting unit 14 to detect the reception channel. After that, the communication signal of the radar system may be detected on the reception channel in the detection.

If the communication signal through the radar system is detected, the control unit 15 causes the channel switching unit 13 to switch the channel set for the first wireless unit 11, from the reception channel to a channel where the radar system does not have the communication signal with signal strength not lower than a threshold value.

A first example of the channel where the radar system does not have the communication signal can be a channel where the communication signal of the radar system belonging to the second band is undetected. For the switching to the channel where the communication signal of the radar system is undetected, the control unit 15 may cause the radar detecting unit 14 to detect channels belonging to the second band other than the reception channel.

The detection aims at searching for an undetected channel through the radar system.

The control unit 15 may cause the radar detecting unit 14 to perform detection aiming at searching for an undetected channel, preferentially starting from a channel having a frequency close to that of the reception channel. Since the detection preferentially starts from the channel having a frequency close to that of the reception channel, the channel where the communication signal through the radar system is undetected can be quickly detected.

Alternatively, the control unit 15 may detect a plurality of channels where the communication signal of the radar system is undetected, and then determine the channel in the best receiving state (e.g., received power) from the detected channels. The determination of the channel can immediately achieve high communication quality.

A second example of the channel where the radar system does not have the communication signal can be a channel belonging to the first band. The switching to the channel belonging to the first band does not require detection using the radar detecting unit 14, allowing the channel switching unit 13 to quickly switch the channel.

The modulating/demodulating unit 16 in shown FIG. 1 will be specifically described below.

The modulating/demodulating unit 16 demodulates the communication signal received by the first wireless unit 11 through the wireless LAN. Moreover, the modulating/demodulating unit 16 modulates the communication signal through the wireless LAN before the signal is transmitted from the first wireless unit 11.

The specific structure of the modulating/demodulating unit 16 having this structure is not limited. For example, the modulating/demodulating unit 16 may be embodied by a signal processing circuit provided with the MAC and BBP units.

The channel selecting unit 18 in FIG. 1 will be specifically described below.

The channel selecting unit 18 selects the channels set for the first wireless unit 11. A selection result from the channel selecting unit 18 is reflected to a channel switching operation performed by the channel switching unit 13.

For example, the channel selecting unit 18 may use random numbers to randomly select the channel of the first wireless unit 11 from all the channels.

Furthermore, the channel selecting unit 18 may accumulate statistical data for the so far used channels and then select the channels according to the statistical data so as to mean the usage rates of all the channels.

The specific structure of the channel selecting unit 18 having this function is not limited. For example, the channel selecting unit 18 may be embodied by a processor. The processor may also act as the control unit 15.

The radar detection necessity deciding unit 19 shown in FIG. 1 will be specifically described below.

The radar detection necessity deciding unit 19 decides whether or not the channel selected by the channel selecting unit 18 requires radar detection. If the channel selecting unit 18 selects the channel belonging to the second band, the radar detection necessity deciding unit 19 decides that radar detection is necessary.

The decision result of the radar detection necessity deciding unit 19 is reflected to the presence or absence of detection in the radar detecting unit 14.

The specific structure of the radar detection necessity deciding unit 19 having this function is not limited. For example, the radar detection necessity deciding unit 19 may be embodied by a processor.

The processor may also act as the control unit 15.

The channel information storage unit 20 in FIG. 1 will be specifically described below.

The channel information storage unit 20 stores channel information indicating the frequency bands to which the channels belong, channel types contained in the frequency bands, and the necessity or non-necessity of DFS in each frequency band. The channel information is used for selecting the channels by the channel selecting unit 18 and detecting the signal by the radar detecting unit 19.

The channel information storage unit 20 may be embodied by a storage device, e.g., a ROM.

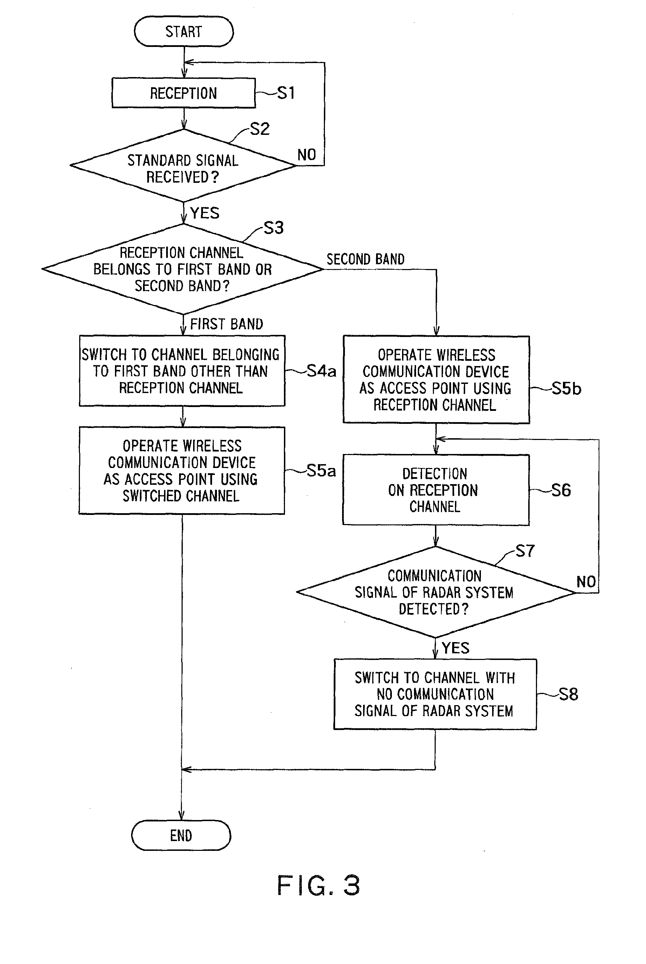

Referring to FIG. 3, an operation example of the wireless communication device 10 according to the present embodiment will be described below. The operation example below is an embodiment of a wireless communication method.

FIG. 3 is a flowchart showing the operation example of the wireless communication device 10 according to the first embodiment.

In FIG. 3, first in step 1 (S1), the first wireless unit 11 receives a signal under the control unit 15 so as to operate the wireless communication device 10 as an access point. In the reception, the control unit 15 detects a standard signal based on the received signal of the first wireless unit 11.

In step 1 (S1), for the first wireless unit 11, channels belonging to the used band of the wireless LAN are sequentially set under the control of the control unit 15 on the channel switching unit 13. The channels set at this point may be selected randomly or in an orderly manner (e.g., in order of channel numbers).

Subsequently, in step 2 (S2), the control unit 15 decides whether the standard signal has been received or not.

In the case of a positive decision result in step 2 (S2), the process advances to step 3 (S3). On the other hand, in the case of a negative decision result in step 2 (S2), the process returns to step 1 (S1).

Subsequently, in step 3 (S3), the control unit 15 decides whether the reception channel belongs to the first band or the second band.

If the control unit 15 decides in step 3 (S3) that the reception channel belongs to the first band, the process advances to step 4a (S4a). On the other hand, if the control unit 15 decides in step 3 (S3) that the reception channel belongs to the second band, the process advances to step 5b (S5b).

If the process advances to step 4a (S4a), the control unit 15 causes the channel switching unit 13 to switch the channel set for the first wireless unit 11 from the reception channel to a channel belonging to the first band other than the reception channel. In next step 5a (S5a), the control unit 15 operates the wireless communication device 10, that is, starts the wireless communication device 10 as an access point for the use of the switched channel.

If the wireless communication device 10 is operated as an access point for the use of the switched channel, the control unit 15 performs various kinds of signal processing for wireless communications with a wireless LAN terminal, that is, a station through the switched channel.

On the other hand, if the process advances to step 5b (S5b), the control unit 15 operates the wireless communication device 10, that is, starts the wireless communication device 10 as an access point for the use of the reception channel.

After step 5b (S5b), the process advances to step 6 (S6).

In step 6 (S6), the control unit 15 causes the radar detecting unit 14 to perform detection on the reception channel.

Subsequently, in step 7 (S7), the control unit 15 decides whether the communication signal of the radar system has been detected or not on the reception channel in the detection of step 6 (S6).

In the case of a positive decision result in step 7 (S7), the process advances to step 8 (S8). On the other hand, in the case of a negative decision result in step 7 (S7), the process returns to step 6 (S6).

Subsequently, in step 8 (S8), the control unit 15 causes the channel switching unit 13 to switch the channel set for the first wireless unit 11, from the reception channel to a channel where the radar system does not have the communication signal with signal strength not lower than the threshold value.

As has been discussed, if the wireless communication device 10 of the present embodiment is operated as an access point for the use of channels belonging to the first band other than the reception channel, wireless communications can be quickly started with high communication quality.

Specifically, wireless communications on a channel belonging to the first band eliminate the need for DFS and thus can be quickly started. Moreover, the use of a channel other than the reception channel can prevent crosstalk, that is, radio wave interference with another wireless communication device using the reception channel, thereby achieving high communication quality.

The channel other than the reception channel may be a channel other than the adjacent channels of the reception channel. This can more effectively avoid crosstalk with another wireless communication device using the reception channel.

Also when the wireless communication device 10 of the present embodiment is used as an access point for the use of the reception channel belonging to the second band, it is expected to quickly start wireless communications.

Specifically, if the reception channel belongs to the second band, the other wireless communication device not provided for the radar system uses the reception channel for wireless LAN communications. Thus, the reception channel can be continuously used for wireless LAN communications.

Moreover, it is assumed that the wireless communication device 10 has the function of setting the validity/invalidity of wireless LAN communications in response to an input in order to prevent outdoor wireless LAN communications in the 5 GHz band (hereinafter, will be called a validity/invalidity setting function).

In this case, the validity/invalidity setting function is not effectively set without detection of the reception channel belonging to the band W52 or W53, thereby preventing an unauthorized input that effectively sets the validity/invalidity setting function outdoors.

### (Second Embodiment)

A second embodiment will be described below. In the explanation of the present embodiment, components corresponding to those of the first embodiment are indicated by the same reference numerals as in the first embodiment and the explanation thereof is omitted.

In a wireless communication device 10 of the present embodiment, a plurality of reception channels belonging to a second band may be detected.

In the detection of the multiply reception channels belonging to the second band in this way, a control unit 15 causes a channel switching unit 13 to switch a channel set for a first wireless unit 11 to one of the reception channels such that a received standard signal has minimum strength. The strength of the standard signal may be the power value of the signal.

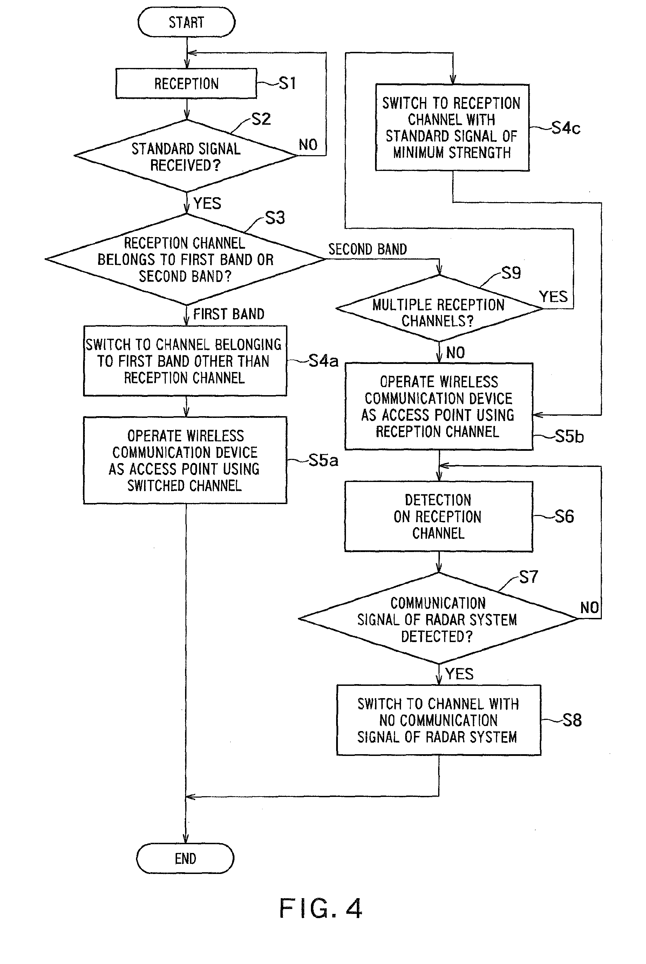

Referring to FIG. 4, an operation example of the wireless communication device 10 according to the present embodiment will be described below. The operation example below is an embodiment of a wireless communication method.

FIG. 4 is a flowchart showing the operation example of the wireless communication device 10 according to the second embodiment.

In FIG. 4, if it is decided that the reception channel in step 3 (S3) of FIG. 3 belongs to the second band, the process advances to step 9 (S9) of FIG. 4 instead of step 5b (S5b) of FIG. 3.

In step 9 (S9), the control unit 15 decides the presence or absence of the reception channels.

In the case of a positive decision result in step 9 (S9), the process advances to step 4c (S4c). On the other hand, in the case of a negative decision result in step 9 (S9), the process advances to step 5b (S5b) described in FIG. 3.

In step 4c (S4c), the control unit 15 causes the channel switching unit 13 to switch the channel set for the first wireless unit 11 to one of the reception channels such that the received standard signal has the minimum strength. After step 4c (S4c), the process advances to step 5b (S5b) described in FIG. 3.

The wireless communication device 10 of the present embodiment can most effectively avoid crosstalk with another wireless communication device using the reception channel.

Other operations of the second embodiment are identical to those of the first embodiment. Thus, the second embodiment can obtain the effect of the first embodiment.

### (Third Embodiment)

A third embodiment will be described below. In the explanation of the present embodiment, components corresponding to those of the first embodiment are indicated by the same reference numerals as in the first embodiment and the explanation thereof is omitted.

A wireless communication device 10 of the present embodiment is different from that of the second embodiment in the configuration of a control unit 15 in the detection of a plurality of reception channels belonging to a second band.

Specifically, the control unit 15 causes a channel switching unit 13 to switch a channel set for a first wireless unit 11 to one of the reception channels such that a received standard signal has strength in a predetermined range. The predetermined range determines the upper limit and the lower limit of signal strength.

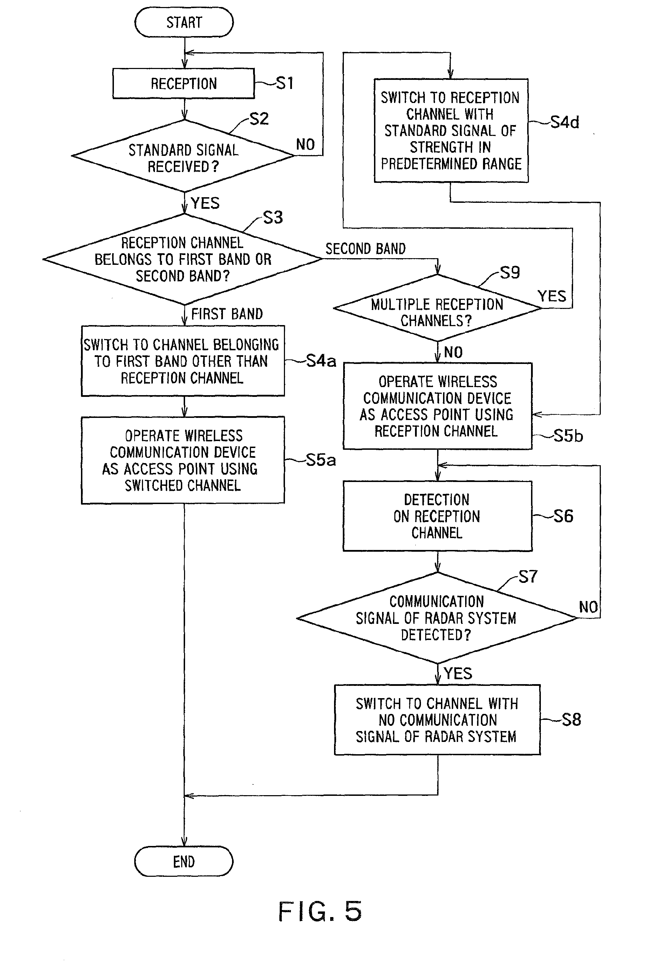

An operation example of the wireless communication device 10 according to the present embodiment will be described below with reference to the flowchart of FIG. 5. The operation example below is an embodiment of a wireless communication method.

FIG. 5 is a flowchart showing the operation example of the wireless communication device 10 according to the third embodiment.

FIG. 5 is different from FIG. 4 in that step 4d (S4d) is performed instead of step 4c (S4c).

In step 4d (S4d), the control unit 15 causes the channel switching unit 13 to switch the channel set for the first wireless unit 11 to the reception channel such that the received standard signal has strength in the predetermined range.

The wireless communication device 10 of the present embodiment can effectively avoid crosstalk with another wireless communication device using the reception channel.

Moreover, the present embodiment can select the reception channel where the standard signal is detected with a certain level of strength using another wireless communication device instead of a radar system.

Other operations of the third embodiment are identical to those of the second embodiment. Thus, the third embodiment can further obtain the effect of the second embodiment.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A wireless communication device operable as an access point of a first wireless communication system,
the wireless communication device comprising:
a first wireless unit for which a channel belonging to a used band of the first wireless communication system is set; and
a control unit that operates the wireless communication device as the access point if the first wireless unit receives a standard signal in compliance with a standard of the first wireless communication system,
wherein if at least one reception channel for the standard signal belongs to a first band outside a used band of a second wireless communication system in the used band of the first wireless communication system, the control unit sets a channel other than the at least one reception channel belonging to the first band for the first wireless unit, allowing the wireless communication device to operate as the access point for use of the channel other than the at least one reception channel belonging to the first band, and
if the at least one reception channel belongs to a second band in the used band of the second wireless communication system in the used band of the first wireless communication system, the control unit allows the wireless communication device to operate as the access point for use of the at least one reception channel belonging to the second band.

2. The wireless communication device according to claim 1, wherein if the at least one reception channel belongs to the second band and comprises multiple detected reception channels, the control unit sets one of the reception channels such that the received standard signal has minimum strength for the first wireless unit.

3. The wireless communication device according to claim 1, wherein if the at least one reception channel belongs to the second band and comprises multiple detected reception channels, the control unit sets one of the reception channels such that the received standard signal has strength in a predetermined range for the first wireless unit.

4. The wireless communication device according to claim 1, further comprising a second wireless unit for which a channel belonging to a second band is set; and
a detecting unit that detects a communication signal through the second wireless communication system based on a reception result by the second wireless unit on the channel belonging to the second band,
wherein if the reception channel belongs to the second band, the control unit operates the wireless communication device as an access point for used of the reception channel and causes the detecting unit to perform the detection on the reception channel, and then if the communication signal through the second wireless communication system is detected on the reception channel in the detection, the control unit sets a channel where the second wireless communication system does not have the communication signal with signal strength not lower than a threshold value.

5. The wireless communication device according to claim 2, further comprising a second wireless unit for which a channel belonging to a second band is set; and
a detecting unit that detects a communication signal through the second wireless communication system based on a reception result by the second wireless unit on the channel belonging to the second band,
wherein if the reception channel belongs to the second band, the control unit operates the wireless communication device as an access point for used of the reception channel and causes the detecting unit to perform the detection on the reception channel, and then if the communication signal through the second wireless communication system is detected on the reception channel in the detection, the control unit sets a channel where the second wireless communication system does not have the communication signal with signal strength not lower than a threshold value.

6. The wireless communication device according to claim 3, further comprising a second wireless unit for which a channel belonging to a second band is set; and
a detecting unit that detects a communication signal through the second wireless communication system based on a reception result by the second wireless unit on the channel belonging to the second band,
wherein if the reception channel belongs to the second band, the control unit operates the wireless communication device as an access point for used of the reception channel and causes the detecting unit to perform the detection on the reception channel, and then if the communication signal through the second wireless communication system is detected on the reception channel in the detection, the control unit sets a channel where the second wireless communication system does not have the communication signal with signal strength not lower than a threshold value.

7. The wireless communication device according to claim 4, wherein the control unit sets a channel where the communication signal through the second wireless communication system belonging to the second band is undetected, as the channel where the second wireless communication system does not have the communication signal.

8. The wireless communication device according to claim 5, wherein the control unit sets a channel where the communication signal through the second wireless communication system belonging to the second band is undetected, as the channel where the second wireless communication system does not have the communication signal.

9. The wireless communication device according to claim 6, wherein the control unit sets a channel where the communication signal through the second wireless communication system belonging to the second band is undetected, as the channel where the second wireless communication system does not have the communication signal.

10. The wireless communication device according to claim 4, wherein the control unit sets a channel belonging to the first band, as the channel where the second wireless communication system does not have the communication signal.

11. The wireless communication device according to claim 5, wherein the control unit sets a channel belonging to the first band, as the channel where the second wireless communication system does not have the communication signal.

12. The wireless communication device according to claim 6, wherein the control unit sets a channel belonging to the first band, as the channel where the second wireless communication system does not have the communication signal.

13. A wireless communication device operable as an access point of a first wireless communication system,
the wireless communication device comprising:
a first wireless unit for which a channel belonging to a used band of the first wireless communication system is set; and
a control unit that operates the wireless communication device as the access point if the first wireless unit receives a standard signal in compliance with a standard of the first wireless communication system,
wherein if the at least one reception channel for the standard signal belongs to a second band in the used band of the second wireless communication system in the used band of the first wireless communication system, the control unit allows the wireless communication device to operate as the access point for use of the at least one reception channel belonging to the second band.

14. A wireless communication method for a wireless communication device,
the wireless communication device comprising:
a first wireless unit for which a channel belonging to a used band of a first wireless communication system is set,
the wireless communication device being operated as an access point of the first wireless communication system if the first wireless unit receives a standard signal in compliance with a standard of the first wireless communication system,
wherein the method comprises:
setting a channel belonging to a first band other than the reception channel for the first wireless unit, allowing the wireless communication device to operate as the access point for use of the channel belonging to a first band other than the reception channel, if the reception channel belongs to the first band outside a used band of a second wireless communication system in the used band of the first wireless communication system; and
operating the wireless communication device as the access point for use of the reception channel belonging to a second band, if the reception channel belongs to a second band in the used band of the second wireless communication system in the used band of the first wireless communication system.
